# EUROPEAN PATENT SPECIFICATION

(11) **EP 2 108 576 B1**
(45) Date of publication and mention of the grant of the patent: **17.11.2010**
(21) Application number: 08007112.9
(22) Date of filing: 10.04.2008
(51) Int. Cl.: B62K 21/04

(54) **Upper frame of front fork for bicycle**
Gabelbrücke für ein Fahrrad
Cadre supérieur de fourche avant pour bicyclette

(43) Date of publication of application: 14.10.2009
(73) Proprietor: Yuan Min An Enterprise Co., Ltd., Fong Yuan, Taichung (TW)
(72) Inventor: Yu, Kuo-Pin, Fong Shih Road, Fong Yuan, Taichung (TW)
(74) Representative: Becker Kurig Straus

(56) References cited:
- EP-A- 1 767 447
- WO-A-96/09159
- DE-C- 159 409
- FR-A- 947 033
- FR-A- 2 768 691
- JP-U- 2 017 492
- US-A- 5 626 355
- US-A- 5 944 932

## Description

### BACKGROUND OF THE INVENTION

### 1. Field of the Invention

The present invention relates generally to a bicycle, and more specifically to an upper frame of a front fork for a bicycle, which has improved structure strength to bear stress generated from a front wheel of the bicycle,

### 2. Description of the Related Art

A conventional front fork of a bicycle, which is made of carbon fiber reinforced resin, includes an upright tube, a fork crown integrally mounted on a bottom end of the upright tube, and two fork tubes respectively extending downwardly from two ends of the fork crown. A front fork according to the preamble of claim 1 is shown in the document FR 2 768 691.

In actual use, the upright tube may be easily damaged due to stress parallel to forward and backward directions of the bicycle. The fork crown may be damaged due to an axial stress generated by the fork tubes. Thus, the issue of how to improve the structure strength of the front fork of the bicycle, especially for a mountain bicycle, is always the manufacture's concern.

### SUMMARY OF THE INVENTION

The present invention has been accomplished in view of the above-noted circumstances. It is one objective of the present invention to provide an upper frame of a front fork for a bicycle, which has improved structure strength to bear stress generated from a front wheel of the bicycle.

To achieve this objective of the present invention, the upper frame of the front fork for the bicycle comprises an upright tube and two branch tubes. The upright tube has an axial rib. The branch tubes extend bilaterally from a bottom end of the upright tube and each have an axial rib parallel substantially to a longitudinal direction of the upright tube, and a connecting portion located at an end of the branch tube for connection of a fork tube.

Accordingly, the upright tube can enhance its structure strength by the axial rib thereof, and the branch tubes also can enhance their structure strength by the axial ribs thereof to bear stress generated from the fork tubes. The axial ribs of the upright tube partitions the lower part of said upright tube into two first chambers and the axial ribs of the branch tubes partition said branch tubes into two second chambers which each communicate with an adjacent first chamber.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a front view of the upper frame according to a preferred embodiment of the present invention;
FIG 2 is a cutaway view of the upper frame according to the preferred embodiment of the present invention;
FIG 3 is a top view of the upper frame according to the preferred embodiment of the present invention, and
FIG. 4 is a top cutaway view of the branch tubes of the upper frame according to the preferred embodiment of the present invention.

### DETAILED DESCRIPTION OF THE INVENTION

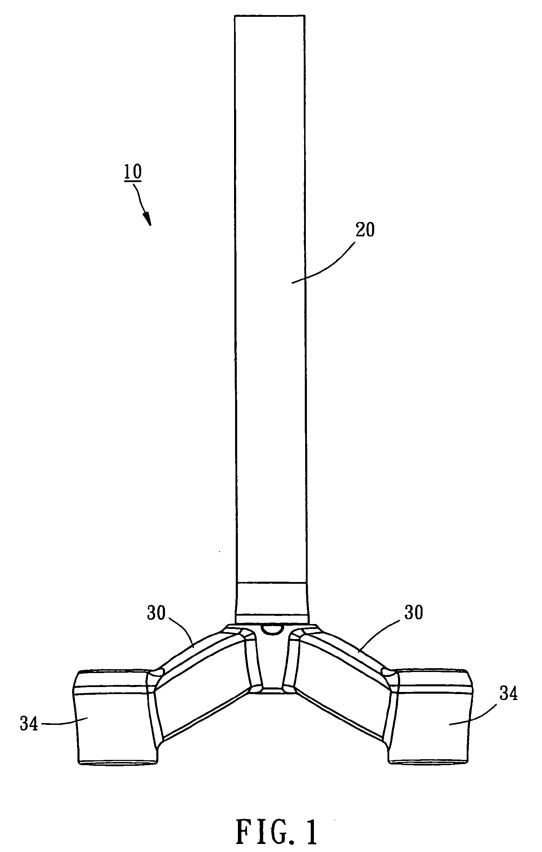

As shown in FIGS. 1 to **4****,** an upper frame **10** of a front fork for a bicycle in accordance with the preferred embodiment of the present invention is integrally made of carbon fiber reinforced resin. The upper frame **10** comprises an upright tube **20** and two branch tubes **30.** The fiber may adopt, but not limited to, carbon fiber, glass fiber, boron fiber or Kevlar fiber. The resin may adopt, but not limited to, thermosetting resin or thermoplastic resin.

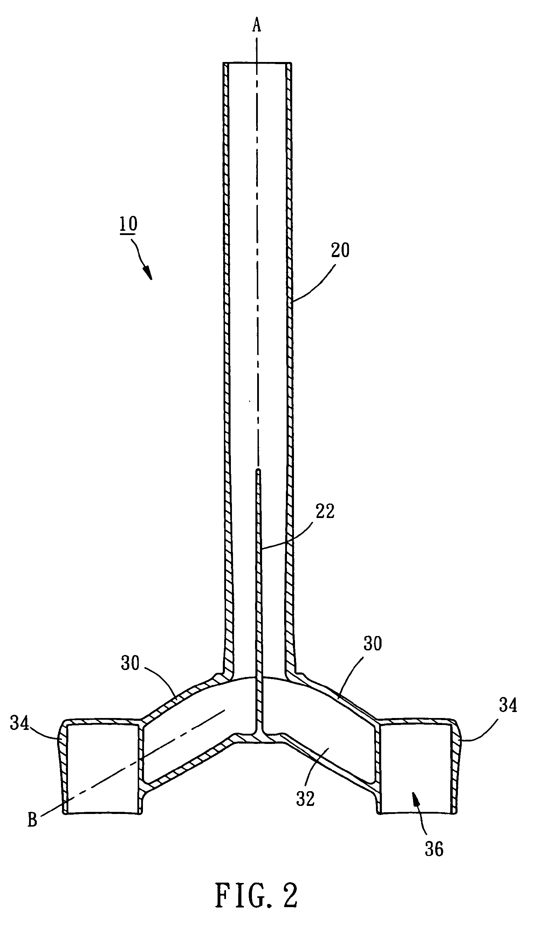

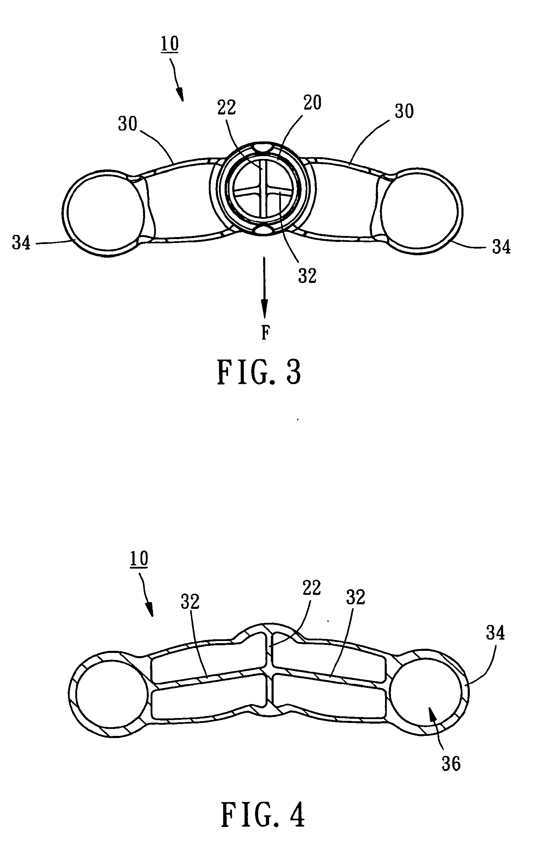

The upright tube **20** has an axial rib **22** on a lower section thereof extending along a longitudinal direction A thereof, as shown in FIG. 2, and parallel to a forward direction **F** of the bicycle, as shown in FIG. 3.

The branch tubes **30** extend bilaterally from a bottom end of the upright tube **20** and each have an axial rib **32** extending along a longitudinal direction **B** thereof and parallel to the longitudinal direction A of the upright tube **20,** i.e. vertical to the horizontal, and a connecting portion **34** located at a distal end thereof and having a hole **36** for connection of a fork tube (not shown).

According to this design, the upright tube **20** can effectively enhance its structure strength to bear stress generated from the forward and backward directions of the bicycle because of the axial rib **22** parallel to the forward direction **F** of the bicycle. Besides, the branch tubes **30** also can enhance their structure strength to bear stress generated from the fork tubes since the axial ribs **32** are vertical to the horizontal. Thus, the upper frame **10** of the present invention has long service life and high structure strength to bear the stress from a front wheel.

The upper frame of the present invention can be made with various kinds of design on the basis of the spirit of the present invention. For example, the position and the direction of the axial rib **22** of the upright tube **20** and the axial ribs **32** of the branch tubes **30** can be provided alternatively.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An upper frame of a front fork (10) for a bicycle, comprising:
an upright tube (20) having an axial rib (22); and
two branch tubes (30) extending bilaterally from a bottom end of said upright tube (20); wherein said branch tubes (30) each have an axial rib (32) parallel substantially to a longitudinal direction (A) of said upright tube (20), and a connecting portion (34) located at an end of said branch tube (30), **characterized in that** the axial rib (22) partitions the lower part of said upright tube 20 into two first chambers and said axial ribs (32) partition said branch tubes (30) into two second chambers which each communicate with an adjacent first chamber.

2. The upper frame of front fork (10) as claimed in claim 1, which is **characterized in that** said axial rib (22) of said upright tube (20) is substantially parallel to a forward direction (F) of the bicycle.

3. The upper frame of front fork (10) as claimed in claim 1, which is **characterized in that** said axial rib (32) of said branch tube (30) is substantially vertical to the horizontal.

## Patentansprüche

1. Oberer Rahmen einer Vordergabel (10) für ein Fahrrad, umfassend:
ein aufrecht stehendes Rohr (20) mit einer axialen Rippe (22), und
zwei Abzweigungsrohre (30), die sich von einem unteren Ende des aufrecht stehenden Rohrs (20) nach beiden Seiten erstrecken, worin die Abzweigungsrohre (30) jeweils eine axiale Rippe (32) im Wesentlichen parallel zu einer Längsrichtung (A) des aufrecht stehenden Rohrs (20) aufweisen, und einen Verbindungsbereich (34), der an einem Ende des Abzweigungsrohrs (30) angeordnet ist, **dadurch gekennzeichnet, dass** die axiale Rippe (22) den unteren Teil des aufrecht stehenden Rohrs (20) in zwei erste Kammern teilt und die axialen Rippen (32) die Abzweigungsrohre (30) in zwei zweite Kammern teilen, die jeweils mit einer angrenzenden ersten Kammer in Verbindung stehen.

2. Oberer Rahmen einer Vordergabel (10) nach Anspruch 1, **dadurch gekennzeichnet, dass** die axiale Rippe (22) des aufrecht stehenden Rohrs (20) im Wesentlichen parallel zu einer Vorwärtsrichtung (F) des Fahrrads ist.

3. Oberer Rahmen einer Vordergabel (10) nach Anspruch 1, **dadurch gekennzeichnet, dass** die axiale Rippe (32) des Abzweigungsrohrs (30) im Wesentlichen vertikal zu der Horizontalen ist.

## Revendications

1. Un cadre supérieur d'une fourche avant (10) pour une bicyclette comprenant :
un tube vertical (20) comportant une nervure axiale (22) ; et
deux tubes de branche (30) s'étendant de chaque côté d'une base dudit tube vertical (20) dans lequel lesdits tubes de branche (30) comportent chacun une nervure axiale (32) sensiblement parallèle à une direction longitudinale (A) dudit tube vertical (20) et une portion de connexion (34) logée à une extrémité dudit tube de branche (30), **caractérisé en ce que** la nervure axiale (22) sépare la portion inférieure dudit tube vertical (20) en deux premières chambres et que lesdites nervures axiales (32) séparent lesdits tubes de branche (30) en deux secondes chambres qui communiquent chacune avec une première chambre adjacente.

2. Le cadre supérieur d'une fourche avant (10) tel que revendiqué dans la revendication 1 qui est **caractérisé en ce que** ladite nervure axiale (22) dudit tube vertical (20) est sensiblement parallèle à une direction de déplacement vers l'avant (F) de la bicyclette.

3. Le cadre supérieur d'une fourche avant (10) tel que revendiqué dans la revendication 1 qui est **caractérisé en ce que** ladite nervure axiale (32) dudit tube de branche (30) est sensiblement verticale par rapport l'horizontale.
